# EUROPEAN PATENT SPECIFICATION

(11) **EP 2 286 607 B1**
(45) Date of publication and mention of the grant of the patent: **31.07.2019**
(21) Application number: 09762644.4
(22) Date of filing: 09.06.2009
(51) Int. Cl.: H04W 8/06, H04W 36/00, H04W 88/12

(54) **METHOD FOR CLEARING INVALID USER EQUIPMENT INFORMATION IN HOME NODE B-GATEWAY**
VERFAHREN ZUR LÖSCHUNG UNGÜLTIGER BENUTZERGERÄTEINFORMATIONEN IN EINEM HEIM-KNOTEN-B-GATEWAY
PROCÉDÉ D'EFFACEMENT D'INFORMATIONS INVALIDES D'ÉQUIPEMENT D'UTILISATEUR SUR UNE PASSERELLE DE NOEUD B DE RATTACHEMENT

(30) Priority: 12.06.2008 CN 200810109485
(43) Date of publication of application: 23.02.2011
(73) Proprietor: Samsung Electronics Co., Ltd., Suwon-si, Gyeonggi-do, 443-742 (KR)
(72) Inventor: ZHAO, Yi, Beijing 100125 (CN); HAN, Dajiang, Beijing 100125 (CN)
(74) Representative: Nederlandsch Octrooibureau
(86) International application number: PCT/KR2009/003084
(87) International publication number: WO 2009/151257

(56) References cited:
- WO-A2-2007/078042
- US-A1- 2002 111 180
- US-A1- 2005 255 846
- US-A1- 2008 076 411
- US-A1- 2008 132 240
- US-B1- 6 181 939
- 'Technical Specifica tion Group Radio Access Netwroks; 3G Home NodeB Study Item Technical Report (Release 8)' 3GPP TR25.820 V8.1.0 3RD GENERATION PARTNERSHIP PROJECT May 2008, XP008146431

## Description

### [Technical Field]

The present invention relates to communication, and in particular to a method for clearing invalid user equipment information in a home Node B-Gateway (HNB-GW).

### [Background Art]

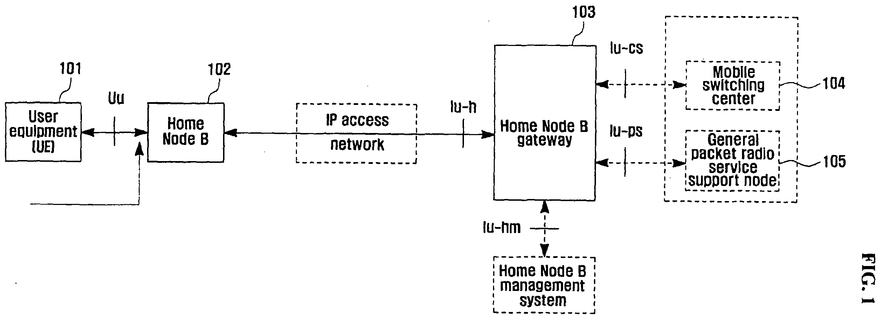

Home Node B is a technique to utilize an indoor small-sized base station to improve indoor 3G signals. A system structure of a home Node B is illustrated in Figure 1. The network elements related to the present invention are described as follows.

User equipment 101 is a terminal to receive data.

In additional to support the functions of 3G Node B and radio network controller (RNC), home Node B 102 needs to support new functions required for deploying a home Node B in a radio access network, such as home Node B authentication, home Node B registration and so on.

Home Node B-Gateway (HNB-GW) 103 is a gateway between the home Node B and a core network. A plurality of home Node Bs can be connected under a single HNB-GW. The core network regards the HNB-GW as a virtual radio network controller. The connection between a HNB-GW and a core network is the same as that between a radio network controller and a core network. Mobile Switching Center 104 manages the circuit-domain services in a core network. General packet radio service supporting node 105 manages the packet-domain services in a core network.

A home Node B connects to a HNB-GW through an interface Iu-h, which supports, in addition to conventional Iu processing functions, new functions like authentication, registration, etc.. The HNB-GW connects to the Mobile Switching Center through an interface Iu-cs. The HNB-GW connects to the general packet radio service supporting nodes through an interface Iu-ps.

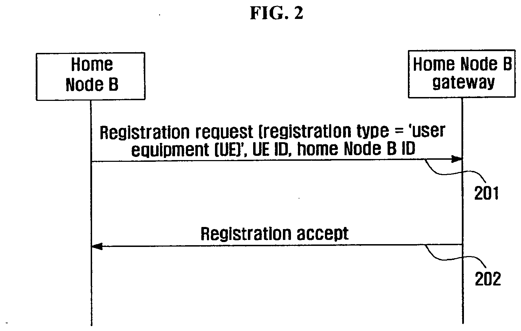

Since a plurality of home Node Bs can be connected under a single HNB-GW, in order to reduce paging load, it is necessary for a home Node B to initiate a User Equipment (UE) registration process to inform the HNB-GW of resident UE information. In this way, the HNB-GW can page a specific UE within the coverage of a single home Node B. Figure 2 show a conventional UE registration flow in the interface Iu -h.

In Figure 2, the home Node B initiates a registration request message 201 to the HNB-GW, the message indicating that specified UE information is to be registered in the HNB-GW. The HNB-GW stores the specified UE information and then responds a registration accept message 202 to the home Node B.
In the current state of art, no discussion is made about how to clear the correspondence between a home Node B and UE (which is stored in the HNB-GW) after the UE moves away from the home Node B. If this correspondence is not cleared from the HNB-GW, the HNB-GW may incorrectly implement UE paging within the old home Node B, since the UE can not receive the paging within the old home Node B any more. Meanwhile, if such invalid UE information is not cleared, memory capacity of the HNB-GW will be soon used up. So, it is desirable to propose a method for clearing invalid UE information in the HNB-GW.
Document US 2008/076411 A1 discloses a communication system that includes a first wireless communication system that includes a Femtocell access point (FAP) and a network controller that can communicatively couple the FAP to a second wireless communication system. The network controller can communicatively couple to the second wireless communication system through a UTRAN lu interface. The FAP can communicatively couple to a user equipment using a shortrange licensed wireless frequency. A method is disclosed in which it is determined whether a user equipment (UE) has roved-out of the first wireless communication system. The method receives a periodic message at the FAP from the UE. When the FAP fails to receive a predetermined number of the periodic messages, the method sends a deregister message to the network controller over a unique connection dedicated to the UE and releases the dedicated connection.

### [Disclosure of Invention]

### [Technical Solution]

An object of the present invention is to provide a method for monitoring a resident state of a UE in a home Node B and clearing invalid UE information from the home Node B gateway.

The invention relates to a method for managing information of a user equipment in a home Node B gateway, as defined in claim 1, to the corresponding method performed at a home node B, as defined in claim 3, as well as to the corresponding home Node B gateway, home node B and system, as defined in claims 6, 8 and 10, respectively.

With the present invention, the HNB-GW can keep track of a resident state of the UE and thus update UE information in real time.

### [Brief Description of Drawings]

Figure 1 shows the system structure of a home Node B;
Figure 2 shows a flowchart of a UE registration process;
Figure 3 shows a process that the home Node B triggers the HNB-GW to clear invalid UE information;
Figure 4 shows a process that an old mobile switching center triggers the HNB-GW to clear invalid UE information;
Figure 5 shows a process that an old general packet radio service supporting node triggers the HNB-GW to clear invalid UE information;
Figure 6 shows a process that a mobile switching center triggers the HNB-GW to clear invalid UE information;
Figure 7 shows a process that a general packet radio service supporting node triggers the HNB-GW to clear invalid UE information.

### [Mode for the Invention]

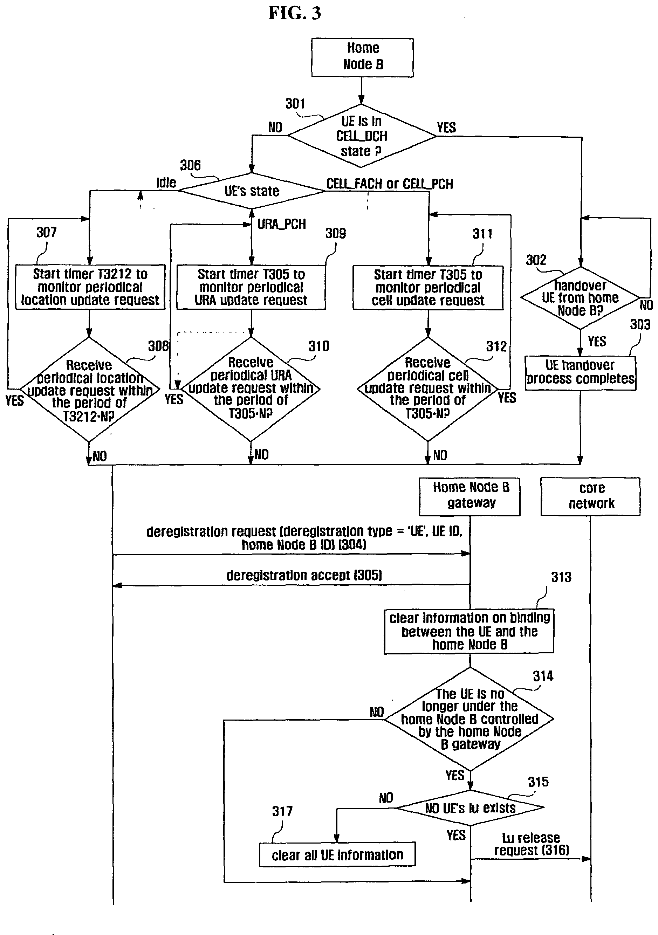

Figure 3 shows a preferred embodiment of the first solution. In this figure, the home Node B monitors the state of the UE and carries out steps 301 and 306. The home Node B adopts different monitoring approaches depending on different states of the UE. When a UE in a CELL_DCH state is handed-over from the home Node B (Step 302 and Step 303), the home Node B sends a de-registration request message to the HNB-GW (304), the message including deregistration type, UE ID and home Node B ID. After receiving this message, the HNB-GW sends a the HNB-GW accept message as response to the home Node B (306), and clearing the binding information between the UE and the home Node B (Step 313). For a UE in an idle state, the home Node B starts (in Step 307) a timer T3212 to monitor a periodical location update request from the UE. If the home Node B receives no periodical location update request from the UE for a time period of N*T3212 (Step 308), the home Node B initiates (304) a deregistration process to instruct the HNB-GW to clear invalid UE information. For a UE in a URA_PCH state, the home Node B starts (in Step 309) a timer T305 to monitor the periodical URA update request from UE. If the home Node B receives no periodical URA update request from the UE for a time period of N*T305 (Step 310), the home Node B initiates (304) a deregistration process to instruct the HNB-GW to clear invalid UE information.

For a UE in a CELL_FACH or a CELL_PCH state, the home Node B starts (in Step 311) the timer T305 to monitor the periodical cell update request for UE. If the home Node B receives no periodical cell update request (Step 312) from the UE for the time period of N*T305, the home Node B initiates (304) a deregistration process to instruct the HNB-GW to clear invalid UE information. After the HNB-GW clears the binding information of the UE and the home Node B, and if the UE is already not in the home Node B under control of the HNB-GW (Step 314), the HNB-GW determines whether the Iu connection of UE still exists. If yes (Step 315), the HNB-GW sends (316) a 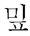 u connection release request?to the core network to require releasing of the Iu connection for UE. Otherwise, the HNB-GW clears all information about the UE (Step 317).

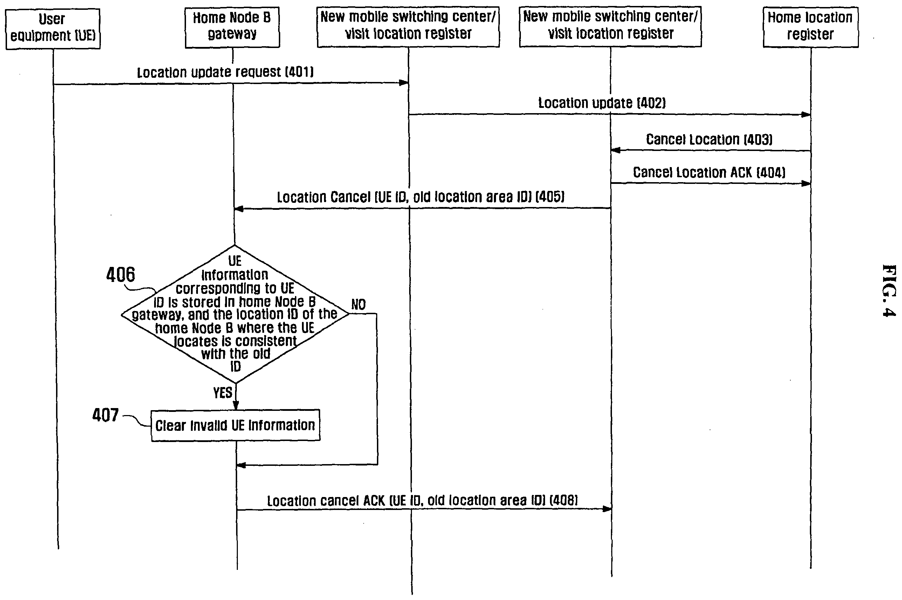

Figures 4 through 7 show preferred embodiments of the second solution.

Figure 4 shows a scenario where the UE changes its location, and the mobile switching center / visit location register also changes. In this figure, the UE initiates (401) a location update request to a new mobile switching center / visit location register. The new mobile switching center / visit location register instructs the home location register to update the location information for UE (402). The home location register sends a "cancel Location" to the old mobile switching center / visit location register (403). After the home location register receives an acknowledgement message (404), the old mobile switching center / visit location register sends (405) a "location cancel"?to the home Node B, including the UE ID and the old location cell ID. After receiving this message, the HNB-GW checks whether the UE information corresponding to the UE ID has been stored locally, according to the UE ID included in the message and whether the location area ID of the home Node B in the UE information corresponding to the UE is consistent with the old location area ID in the message 405 (Step 406). If there is any UE information satisfying the above requirements, the HNB-GW will delete the location correspondence between the UE and the home Node B (Step 407). At this time, if there is no Iu connection between the UE and the core network, the HNB-GW will clear every elements of the UE information. Then, the HNB-GW sends (408) a location cancel ACK message to the old mobile switching center as a response. On the other hand, if there is no UE information satisfying the requirements as mentioned at Step (406), the HNB-GW does not have to carry out any deletion operation, but to directly send (408) the location canceling ACK message to the old mobile service switching center as a response.

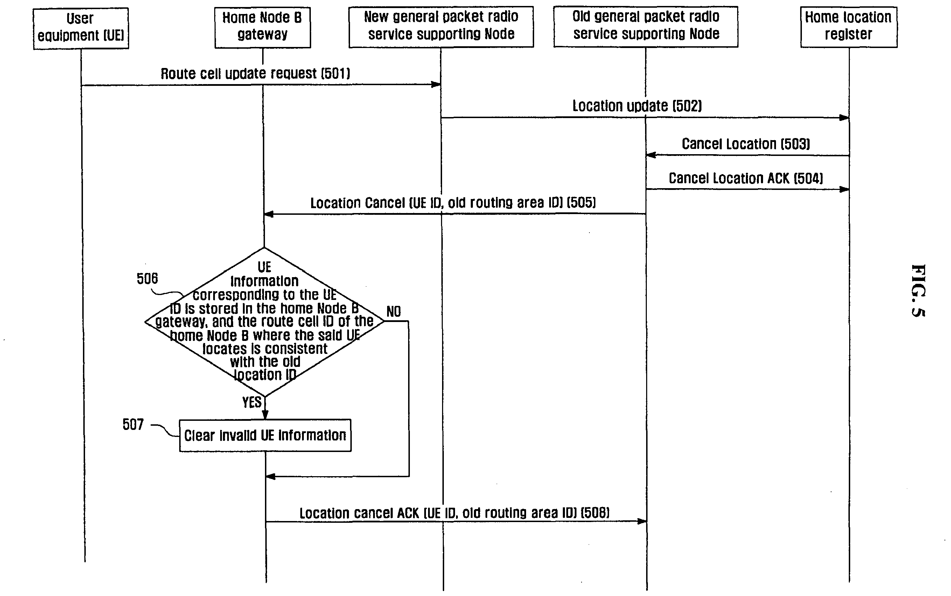

Figure 5 shows an example that can be applied to a scenario where UE changes its location, while the general packet radio service supporting node is changed. In this figure, the UE initiates (501) a route area update request to a new general packet radio service supporting node. The new general packet radio service supporting node instructs (502) the home location register to update the location information for UE. The home location register sends (503)a Cancel Location message to the old general packet radio service supporting node. After the home location register receives the corresponding ACK message (504), the old general packet radio service supporting node sends (505) a location cancel message to the HNB-GW, the message including the UE ID and the old route area ID. After receiving this message, the HNB-GW checks whether the UE information corresponding to the UE ID has been stored locally, according to the UE ID included in the message. And in the UE information, the route area ID of the home Node B corresponding to the UE is consistent with the old routing area ID in the message (Step 506). If there is any UE information satisfying the above requirements, the HNB-GW will delete the location correspondence between the UE and the home Node B (Step 507).

At this time, if no Iu connection exists between the UE and the core network, the HNB-GW will clear every elements of the UE information, and send (508) a Cancel Location message to the old general packet radio service supporting node as a response. If there is no UE information satisfying the requirements at Step 506, the HNB-GW does not have to carry out any deletion operation, but to directly send (508) a location canceling ACK message to the old general packet radio service supporting node as a response.

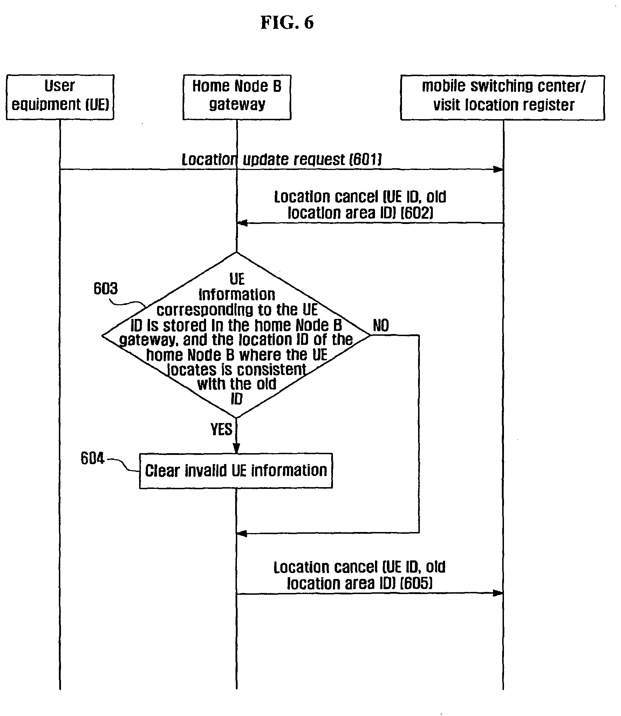

Figure 6 shows an example that can be applied to a scenario that UE changes its location, while the mobile switching center / visit location register is not changed. In this figure, the UE initiates (601) a location update request to the mobile switching center/visit location register. Once the mobile switching center/visit location register detects that the UE 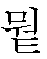 location area ID has changed, it sends (602) a location cancel message to the HNB-GW, the message including the UE ID and the old location area ID. After receiving this message, the HNB-GW checks whether the UE information corresponding to the UE ID has been stored locally, according to the UE ID included in the message and and in the UE information, the location cell ID of the home Node B corresponding to the UE is consistent with the old location area ID in the message (Step 603). If there is any UE information satisfying the above requirements, the HNB-GW will delete the location correspondence between the UE and the home Node B (Step 604). At this time, if no Iu connection exists between the UE and the core network, the HNB-GW will clearing every elements of the UE information , and send (605) a Cancel Location ACK message to the old mobile switching center as a response. On the other hand, if there is no UE information satisfying the requirements at Step 603, the HNB-GW does not have to delete any information, but to directly send (605) the Cancel Location ACK message to the old mobile switching center as a response.

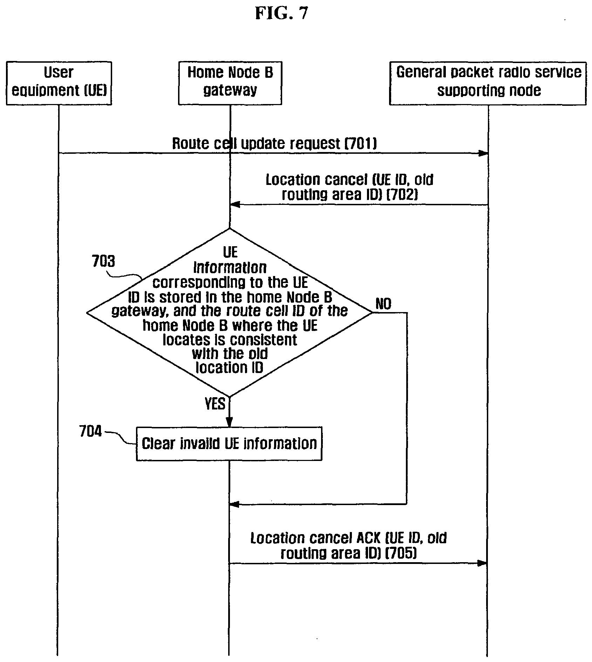

Figure 7 shows an example that can be applied to a scenario where UE changes its location, while the general packet radio service supporting node is not changed. In this figure, the UE initiates (701) a route area update request to the general packet radio service supporting node. Once the general packet radio service supporting node detects that the UE's routing area ID has changed, it sends (702) a location canceling message to the HNB-GW, the message including the UE ID and the old route area ID. After receiving this message, the HNB-GW checks whether the UE information corresponding to the UE ID has been stored locally, according to the UE ID included in the message and whether in the UE information, the route area ID of the home Node B corresponding to the UE is consistent with the old location cell ID in the message (Step 703). If there is any UE information satisfying the above requirements, the HNB-GW will delete the location correspondence between the UE and the home Node B (Step 704). At this time, if no Iu connection exists between the UE and the core network, the HNB-GW will clearing every elements of the UE information and send (705) a Cancel Location ACK message to the general packet radio service supporting node as a response. On the other hand, if there is no UE information satisfying the requirements at Step 703, the HNB-GW does not have to delete any information, but to directly send (705) the Cancel Location ACK message to the old general packet radio service supporting node as a response.

The above so-called invalid UE information can be information on binding between UE and a specified home Node B, or any other information not necessary to be saved in the gateway when the UE has moved away from the home Node B.

In the present invention, the home Node B can be, but not limited to, a home Node B in UMTS, LTE or any other communication system.

## Claims

1. A method for managing information of a user equipment in a home Node B gateway, HNB-GW, (103) the method comprising:
receiving a register message related to a UE (101) from a home node B, HNB, (102) the register message comprising UE-specific information and information on a type of the register message;
generating information of the UE (101) if information on the type of the register message indicates UE registration;
transmitting a register accept message to the HNB (102) in response to the register message;
receiving, from the HNB (102), if the UE (101) is relocated, a de-register message including an identifier, ID, related to the UE (101) and information on a type of the de-register message; and
releasing, if the information on the type of the de-register message indicates UE de-registration, a resource associated with the UE (101) based on the de-register message,
wherein the register message is received based on a procedure initiated by the HNB (102).

2. The method of claim 1, wherein the register message comprises UE specific information and information on a type of the register message,
wherein information of the UE (101) is generated if information on the type of the register message indicates UE register,
wherein the de-register message comprises an identifier, ID, related to the UE (101) and information on a type of the deregister message,
wherein a resource associated with the UE (101) is released if the information on the type of the de-register message indicates UE de-register, and
wherein the UE specific information is associated with a paging for the UE (101).

3. A method for managing information of a user equipment, UE, (101) at a home node B, HNB, (102) in a communication system, the method comprising:
transmitting a register message related to a UE (101) to a home node B gateway, HNB-GW (103);
receiving, from the HNB-GW (103), a register accept message in response to the register message;
identifying whether the UE (101) is relocated; and
transmitting, if the UE (101) is relocated, a de-register message related to the UE (101) to the HNB-GW (103),
wherein a resource associated with the UE (101) is released based on the de-register message if the information on the type of the de-register message indicates UE de-registration, and
wherein the register message is transmitted based on a procedure initiated by the HNB (102).

4. The method of claim 3, wherein the register message comprises UE specific information and information on a type of the register message,
wherein information of the UE (101) is generated if information on the type of the register message indicates UE register,
wherein the de-register message comprises an identifier, ID, related to the UE (101) and information on a type of the deregister message,
wherein a resource associated with the UE (101) is released if the information on the type of the de-register message indicates UE de-register, and
wherein the UE specific information is associated with a paging for the UE (101).

5. The method of claim 3 or 4, further comprising transmitting a message, by the UE (101), for relocating to a home node B, HNB (102).

6. A home node B gateway, HNB-GW, comprising:
a transceiver for transmitting and receiving a signal; and
a controller for:
receiving a register message related to a UE from a home node B, HNB, the register message comprising UE-specific information and information on a type of the register message;
generating information of the UE if information on the type of the register message indicates UE registration;
transmitting a register accept message to the HNB in response to the register message;
receiving, from the HNB, if the UE is relocated, a de-register message including an identifier, ID, related to the UE and information on a type of the de-register message; and
releasing, if the information on the type of the de-register message indicates UE de-registration, a resource associated with the UE based on the de-register message,
wherein the register message is received based on a procedure initiated by the HNB

7. The HNB-GW of claim 6, wherein the register message comprises UE specific information and information on a type of the register message,
wherein information of the UE is generated if information on the type of the register message indicates UE register,
wherein the de-register message comprises an identifier, ID, related to the UE and information on a type of the deregister message,
wherein a resource associated with the UE is released if the information on the type of the de-register message indicates UE de-register, and
wherein the UE specific information is associated with a paging for the UE.

8. A home node B, HNB, comprising:
a transceiver for transmitting and receiving a signal; and
a controller for:
transmitting a register message related to a UE to a home node B gateway, HNB-GW;
receiving, from the HNB-GW, a register accept message in response to the register message;
identifying whether the UE is relocated; and
transmitting, if the UE is relocated, a de-register message related to the UE to the HNB-GW,
wherein a resource associated with the UE is released based on the de-register message if the information on the type of the de-register message indicates UE de-registration, and
wherein the register message is transmitted based on a procedure initiated by the HNB.

9. The HNB of claim 8, wherein the register message comprises UE specific information and information on a type of the register message,
wherein information of the UE is generated if information on the type of the register message indicates UE register,
wherein the de-register message comprises an identifier, ID, related to the UE and information on a type of the deregister message,
wherein a resource associated with the UE is released if the information on the type of the de-register message indicates UE de-register, and
wherein the UE specific information is associated with a paging for the UE.

10. A communication system comprising the HNB of claim 8 or 9 and the UE, the UE comprising:
a transceiver for transmitting and receiving a signal; and
a controller for transmitting a message for relocating to the HNB.

## Patentansprüche

1. Verfahren zur Verwaltung von Informationen eines Benutzergeräts in einem Heim-Knoten-B-Gateway, HNB-GW (103), wobei das Verfahren Folgendes umfasst:
Empfang einer Registrierungsnachricht, die auf ein UE (101) bezogen ist, von einem Heimknoten B, HNB, (102), wobei die Registrierungsnachricht UE-spezifische Informationen und Informationen über eine Art der Registrierungsnachricht umfasst;
Erzeugen von Informationen des UE (101), wenn die Informationen über die Art der Registrierungsnachricht UE-Registrierung angeben;
Übertragen einer Registrierungs-Annahmenachricht an den HNB (102) als Antwort auf die Registrierungsnachricht;
Empfang, von dem HNB (102), wenn das UE (101) verlegt ist, einer Deregistrierungsnachricht einschließlich eines Identifiers, ID, der auf das UE (101) bezogen ist, und von Informationen über eine Art der Deregistrierungsnachricht;
und, wenn die Informationen über die Art der Deregistrierungsnachricht UE-Deregistrierung angeben, Freigabe einer Ressource, die dem UE (101) zugeordnet ist, basierend auf der Deregistrierungsnachricht, wobei die Registrierungsnachricht basierend auf einem Verfahren empfangen wird, das durch den HNB (102) eingeleitet wird.

2. Verfahren nach Anspruch 1, wobei die Registrierungsnachricht UE-spezifische Informationen und Informationen über eine Art der Registrierungsnachricht umfasst, wobei Informationen der UE (101) erzeugt werden, wenn Informationen über die Art der Registrierungsnachricht UE-Registrierung angeben,
wobei die Deregistrierungsnachricht einen Identifier, ID, umfasst,der auf das UE (101) bezogen ist, und Informationen über eine Art der Deregistrierungsnachricht,
wobei eine Ressource, die dem UE (101) zugeordnet ist, freigegeben wird, wenn die Informationen über die Art der Deregistrierungsnachricht UE-Deregistrierung angeben, und
wobei die UE-spezifischen Informationen mit einem Paging für das UE (101) verbunden sind.

3. Verfahren zur Verwaltung von Informationen eines Benutzergeräts, UE, (101) bei einem Heimknoten B, HNB (102) in einem Kommunikationssystem, wobei das Verfahren Folgendes umfasst:
Übertragen einer Registrierungsnachricht, die auf ein UE (101) bezogen ist, an ein Heim-Knoten-B-Gateway, HNB-GW (103);
Empfang, von dem HNB-GW (103), einer Registrierungs-Annahmenachricht als Antwort auf die Registrierungsnachricht;
Identifizieren, ob das UE (101) verlegt ist, und
Übertragen, falls das UE (101) verlegt ist, einer Deregistrierungsnachricht bezogen auf das UE (101) an das HNB-GW (103),
wobei eine Ressource, die dem UE (101) zugeordnet ist, freigegeben wird, basierend auf der Deregistrierungsnachricht, wenn die Informationen über die Art der Deregistrierungsnachricht UE-Deregistrierung angeben, und
wobei die Registrierungsnachricht basierend auf einem Verfahren übertragen wird, das durch den HNB (102) eingeleitet wird.

4. Verfahren nach Anspruch 3, wobei die Registrierungsnachricht UE-spezifische Informationen und Informationen über eine Art der Registrierungsnachricht umfasst, wobei Informationen des UE (101) erzeugt werden, wenn Informationen über die Art der Registrierungsnachricht UE-Registrierung angeben,
wobei die Deregistrierungsnachricht einen Identifier, ID, umfasstder auf das UE (101) bezogen ist, und Informationen über eine Art der Deregistrierungsnachricht,
wobei eine Ressource, die dem UE (101) zugeordnet ist, freigegeben wird, wenn die Informationen über die Art der Deregistrierungsnachricht UE-Deregistrierung angeben, und
wobei die UE-spezifischen Informationen mit einem Paging für das UE (101) verbunden sind.

5. Verfahren nach Anspruch 3 oder 4, das des Weiteren die Übertragung einer Nachricht, durch das UE (101), zur Verlegung an einen Heimknoten B, HNB (102), umfasst.

6. Heim-Knoten-B-Gateway, HNB-GW, mit:
einem Transceiver zum Übertragen und Empfangen eines Signals; und
einer Steuervorrichtung zwecks:
Empfang einer Registrierungsnachricht, bezogen auf ein UE, von einem Heimknoten B, HNB, wobei die Registrierungsnachricht UE-spezifische Informationen und Informationen über eine Art der Registrierungsnachricht umfasst;
Erzeugen von Informationen des UE, wenn Informationen über die Art der Registrierungsnachricht UE-Registrierung angeben;
Übertragen einer Registrierungs-Annahmenachricht an den HNB als Antwort auf die Registrierungsnachricht;
Empfang, von dem HNB, falls das UE verlegt ist, einer Deregistrierungsnachricht einschließlich eines Identifiers, ID, der auf das UE bezogen ist, und von Informationen über eine Art der Deregistrierungsnachricht; und
Freigabe, wenn die Informationen über die Art der Deregistrierungsnachricht UE-Deregistrierung angeben, einer Ressource, die dem UE zugeordnet ist, basierend auf der Deregistrierungsnachricht,
wobei die Registrierungsnachricht basierend auf einem Verfahren empfangen wird, das durch den HNB eingeleitet wird.

7. HNB-GW nach Anspruch 6, wobei die Registrierungsnachricht UE-spezifische Informationen und Informationen über eine Art der Registrierungsnachricht umfasst, wobei Informationen des UE erzeugt werden, wenn Informationen über die Art der Registrierungsnachricht UE-Registrierung angeben,
wobei die Deregistrierungsnachricht einen Identifier, ID, umfasst, der auf das UE bezogen ist, und Informationen über eine Art der Deregistrierungsnachricht,
wobei eine Ressource, die dem UE zugeordnet ist, freigegeben wird, wenn die Informationen über die Art der Deregistrierungsnachricht UE-Deregistrierung angeben, und
wobei die UE-spezifischen Informationen mit einem Paging für das UE verbunden sind.

8. Heimknoten B, HNB, mit:
einem Transceiver zum Übertragen und Empfangen eines Signals; und
einer Steuervorrichtung zwecks:
Übertragen einer Registrierungsnachricht, bezogen auf ein UE, an ein Heim-Knoten-B-Gateway, HNB-GW;
Empfang, von dem HNB-GW, einer Registrierungs-Annahmenachricht als Antwort auf die Registrierungsnachricht;
Identifizieren, ob das UE verlegt ist; und
Übertragen, falls das UE verlegt ist, einer Deregistrierungsnachricht, bezogen auf das UE, an das HNB-GW,
wobei eine Ressource, die dem UE zugeordnet ist, basierend auf der Deregistrierungsnachricht freigegeben wird, wenn die Informationen über die Art der Deregistrierungsnachricht UE-Deregistrierung angeben, und
wobei die Registrierungsnachricht basierend auf einem Verfahren übertragen wird, das durch den HNB eingeleitet wird.

9. HNB nach Anspruch 8, wobei die Registrierungsnachricht UE-spezifische Informationen und Informationen über eine Art der Registrierungsnachricht umfasst, wobei Informationen des UE erzeugt werden, wenn Informationen über die Art der Registrierungsnachricht UE-Registrierung angeben,
wobei die Deregistrierungsnachricht einen Identifier, ID, umfasst, der auf das UE bezogen ist, und Informationen über eine Art der Deregistrierungsnachricht,
wobei eine Ressource, die dem UE zugeordnet ist, freigegeben wird, wenn die Informationen über die Art der Deregistrierungsnachricht UE-Deregistrierung angeben, und
wobei die UE-spezifischen Informationen mit einem Paging für das UE verbunden sind.

10. Kommunikationssystem mit dem HNB nach Anspruch 8 oder 9 und dem UE, wobei das UE Folgendes umfasst:
einen Transceiver zum Übertragen und Empfangen eines Signals; und
eine Steuervorrichtung zum Übertragen einer Nachricht zur Verlagerung zu dem HNB.

## Revendications

1. Procédé de gestion d'informations d'un équipement d'utilisateur sur une passerelle de noeud B de rattachement, HNB-GW, (103) le procédé comprenant :
recevoir un message d'enregistrement associé à un UE (101) à partir d'un noeud B de rattachement, HNB, (102) le message d'enregistrement comprenant des informations spécifiques à l'UE et des informations sur un type du message d'enregistrement ;
générer des informations de l'UE (101) si des informations sur le type du message d'enregistrement indiquent un enregistrement d'UE ;
transmettre un message d'acceptation d'enregistrement au HNB (102) en réponse au message d'enregistrement ;
recevoir, en provenance du HNB (102), si l'UE (101) est transféré, un message de désenregistrement incluant un identifiant, ID, associé à l'UE (101) et des informations sur un type du message de désenregistrement ; et
libérer, si les informations sur le type du message de désenregistrement indiquent un désenregistrement d'UE, une ressource associée à l'UE (101) basée sur le message de désenregistrement,
où le message d'enregistrement est reçu sur la base d'une procédure initiée par le HNB (102).

2. Procédé selon la revendication 1, où le message d'enregistrement comprend des informations spécifiques à l'UE et des informations sur un type du message d'enregistrement,
où des informations de l'UE (101) sont générées si des informations sur le type du message d'enregistrement indiquent un enregistrement d'UE,
où le message de désenregistrement comprend un identifiant, ID, associé à l'UE (101) et des informations sur un type du message de désenregistrement,
où une ressource associée à l'UE (101) est libérée si les informations sur le type du message de désenregistrement indiquent un désenregistrement d'UE, et
où les informations spécifiques à l'UE sont associées à une radiomessagerie pour l'UE (101).

3. Procédé de gestion d'informations d'un équipement d'utilisateur, UE, (101) sur un noeud B de rattachement, HNB, (102) dans un système de communication, le procédé comprenant :
transmettre un message d'enregistrement associé à un UE (101) à une passerelle de noeud B de rattachement, HNB-GW (103) ;
recevoir, en provenance de la HNB-GW (103), un message d'acceptation d'enregistrement en réponse au message d'enregistrement ;
identifier si l'UE (101) est transféré ; et
transmettre, si l'UE (101) est transféré, un message de désenregistrement associé à l'UE (101) à la HNB-GW (103),
où une ressource associée à l'UE (101) est libérée sur la base du message de désenregistrement si les informations sur le type du message de désenregistrement indiquent un désenregistrement d'UE, et
où le message d'enregistrement est transmis sur la base d'une procédure initiée par le HNB (102).

4. Procédé selon la revendication 3, où le message d'enregistrement comprend des informations spécifiques à l'UE et des informations sur un type du message d'enregistrement,
où des informations de l'UE (101) sont générées si des informations sur le type du message d'enregistrement indiquent un enregistrement d'UE,
où le message de désenregistrement comprend un identifiant, ID, associé à l'UE (101) et des informations sur un type du message de désenregistrement,
où une ressource associée à l'UE (101) est libérée si les informations sur le type du message de désenregistrement indiquent un désenregistrement d'UE, et
où les informations spécifiques à l'UE sont associées à une radiomessagerie pour l'UE (101).

5. Procédé selon la revendication 3 ou 4, comprenant, en outre, la transmission par l'UE (101) d'un message pour son transfert à un noeud B de rattachement, HNB (102).

6. Passerelle de noeud B de rattachement, HNB-GW, comprenant :
un émetteur-récepteur pour transmettre et recevoir un signal ; et
un contrôleur pour :
recevoir un message d'enregistrement associé à un UE d'un noeud B de rattachement, HNB, le message d'enregistrement comprenant des informations spécifiques à l'UE et des informations sur un type du message d'enregistrement ;
générer des informations de l'UE si des informations sur le type du message d'enregistrement indiquent un enregistrement d'UE ;
transmettre un message d'acceptation d'enregistrement au HNB en réponse au message d'enregistrement ;
recevoir, en provenance du HNB, si l'UE est transféré, un message de désenregistrement incluant un identifiant, ID, associé à l'UE et des informations sur un type du message de désenregistrement ; et
libérer, si les informations sur le type du message de désenregistrement indiquent un désenregistrement d'UE, une ressource associée à l'UE sur la base d'un message de désenregistrement,
où le message d'enregistrement est reçu sur la base d'une procédure initiée par le HNB.

7. HNB-GW selon la revendication 6, où le message d'enregistrement comprend des informations spécifiques à l'UE et des informations sur un type du message d'enregistrement,
où des informations de l'UE sont générées si des informations sur le type du message d'enregistrement indiquent un enregistrement d'UE,
où le message de désenregistrement comprend un identifiant, ID, associé à l'UE et des informations sur un type du message de désenregistrement,
où une ressource associée à l'UE est libérée si les informations sur le type du message de désenregistrement indiquent un désenregistrement d'UE, et
où les informations spécifiques à l'UE sont associées à une radiomessagerie pour l'UE.

8. Un noeud B de rattachement, HNB, comprenant :
un émetteur-récepteur pour transmettre et recevoir un signal ; et
un contrôleur pour :
transmettre un message d'enregistrement associé à un UE à une passerelle de noeud B de rattachement, HNB-GW ;
recevoir, en provenance de la HNB-GW, un message d'acceptation d'enregistrement en réponse au message d'enregistrement ;
identifier si l'UE est transféré ; et
transmettre, si l'UE est transféré, un message de désenregistrement associé à l'UE à la HNB-GW,
où une ressource associée à l'UE est libérée sur la base du message de désenregistrement si les informations sur le type du message de désenregistrement indiquent un désenregistrement d'UE, et
où le message d'enregistrement est transmis sur la base d'une procédure initiée par le HNB.

9. HNB selon la revendication 8, où le message d'enregistrement comprend des informations spécifiques à l'UE et des informations sur un type du message d'enregistrement,
où des informations de l'UE sont générées si des informations sur le type du message d'enregistrement indiquent un enregistrement d'UE,
où le message de désenregistrement comprend un identifiant, ID, associé à l'UE et des informations sur un type du message de désenregistrement,
où une ressource associée à l'UE est libérée si les informations sur le type du message de désenregistrement indiquent un désenregistrement d'UE, et
où les informations spécifiques à l'UE sont associées à une radiomessagerie pour l'UE.

10. Système de communication comprenant le HNB selon la revendication 8 ou 9 et l'UE, l'UE comprenant :
un émetteur-récepteur pour transmettre et recevoir un signal ; et
un contrôleur pour transmettre un message de transfert au HNB.
